# EUROPÄISCHE PATENTSCHRIFT

(11) **EP 1 545 164 B1**
(45) Veröffentlichungstag und Bekanntmachung des Hinweises auf die Patenterteilung: **27.09.2006**
(21) Anmeldenummer: 04027916.8
(22) Anmeldetag: 24.11.2004
(51) Int. Cl.: H05B 41/28, H05B 41/285

(54) **Schaltungsanordnung zum Betreiben von elektrischen Lampen**
Circuit arrangement for operating electric lamps
Circuit pour alimenter des lampes électriques

(30) Priorität: 19.12.2003 DE 10359882
(43) Veröffentlichungstag der Anmeldung: 22.06.2005
(73) Patentinhaber: Patent-Treuhand-Gesellschaft für elektrische Glühlampen mbH, 81543 München (DE)
(72) Erfinder: Lecheler, Reinhard, 86633 Neuburg/Donau (DE); Schallmoser, Oskar, 85521 Ottobrunn (DE)

(56) Entgegenhaltungen:
- WO-A-90/09729
- US-A- 6 108 220
- US-A1- 2002 047 640
- PATENT ABSTRACTS OF JAPAN Bd. 1999, Nr. 03, 31. März 1999 (1999-03-31) & JP 10 315849 A (DENSO CORP), 2. Dezember 1998 (1998-12-02)

## Beschreibung

### Technisches Gebiet

Die Erfindung geht aus von einer Schaltungsanordnung zum Betreiben von elektrischen Lampen, beispielsweise Quecksilber-Niederdruckentladungslampen oder insbesondere auch dielektrisch behinderte Entladungslampen.

Für den Betrieb derartiger Lampen eignen sich unter anderem elektronische Vorschaltgeräte, die zwei- oder mehrstufige Schaltungsanordnungen umfassen. Als Eingangsstufe kommt dabei ein spannungserhöhender Konverter, z.B. ein Hochsetzsteller, in Betracht. Insbesondere wenn derartige Lampe-Vorschaltgerät-Systeme in andere Geräte eingebaut sind, beispielsweise zur Hinterleuchtung von Flüssigkristall-Bildschirmen oder als Beleuchtungssystem in Geräten zur Büroautomatisierung, wie z.B. Drucker oder Scanner, und von externen Netzteilen mit niederen Gleichspannungen, z.B. 12, 19 oder 24 Volt, versorgt werden, kann das Problem auftreten, dass im Fehlerfall, z.B. bei Überlast, Kurzschluss o.ä., die eingangsseitige Schmelzsicherung des Vorschaltgerätes nicht anspricht. Dieses Problem tritt insbesondere dann auf, wenn das externe Netzteil im Fehlerfall den Strom auf einen Wert begrenzt, der unterhalb der Auslöseschwelle der Eingangssicherung liegt. Zwar ist im Normalfall der ausgangsseitige Strom eines spannungserhöhenden Konverters um den Faktor der Spannungserhöhung niedriger als der Eingangsstrom. Im Fehlerfall fließt allerdings in seinem Ausgang und folglich in die nachfolgende Schaltungsstufe weitgehend der gesamte in seinem Eingang fließende Fehlerstrom. Als Folge kann es zu lokalen Überhitzungen in der Schaltung bis hin zur Entzündung des gesamten Vorschaltgerätes kommen. Um dies zu Verhindern, werden bisher Temperatursicherungen eingesetzt, die allerdings relativ aufwendig und damit kostspielig sind.

### Stand der Technik

In der Schrift US 6 323 600 ist eine Schaltungsanordnung zum Betreiben einer dielektrischen Barriere-Entladungslampe offenbart, die einen Sperrwandler umfasst. Mit Hilfe des Sperrwandlers werden Impulsspannungsfolgen erzeugt, mit denen ein besonders effizienter Betrieb von dielektrischen Barriere-Entladungslampen möglich ist.

Die WO 01/11927 zeigt eine Schaltungsanordnung zum Betreiben mehrerer dielektrischer Barriere-Entladungslampen. Diese Schaltungsanordnung weist eine gemeinsame Eingangsstufe und für jede Lampe jeweils eine eigens zugeordnete Endstufe auf.

### Darstellung der Erfindung

Die Aufgabe der vorliegenden Erfindung ist es, eine Schaltungsordnung gemäß dem Oberbegriff des Anspruchs 1 mit verbessertem Schutz im Fehlerfall bereitzustellen.

Diese Aufgabe wird gelöst durch eine Schaltungsanordnung zum Betreiben von elektrischen Lampen mit einer Eingangsstufe und zumindest einer nachfolgenden weiteren Schaltungsstufe, dadurch gekennzeichnet, dass die Eingangsstufe als spannungserhöhender Konverter ausgebildet ist, der an seinem Ausgang eine Zwischenkreisspannung erzeugt, die höher ist als eine an seinem Eingang anliegende Eingangsspannung, wobei die Zwischenkreisspannung als Eingangsspannung für die nachfolgende Schaltungsstufe dient, im Fehlerfall den in seinem Eingang fließenden Fehlerstrom weitgehend vollständig auch in seinem Ausgang und folglich in die nachfolgende Schaltungsstufe fließen lässt, und zwischen Eingangsstufe und nachfolgender Schaltungsstufe eine Zwischenkreis-Überstromsicherung geschaltet ist.

Besonders vorteilhafte Ausgestaltungen finden sich in den abhängigen Ansprüchen.

Außerdem wird Schutz für ein Beleuchtungssystem mit einer elektrischen Lampe, insbesondere einer dielektrischen Barriere-Entladungslampe, die mit der erfindungsgemäßen Schaltungsanordnung verbunden ist, beansprucht.

Die Eingangsstufe der erfindungsgemäßen Schaltungsanordnung ist als spannungserhöhender Konverter, z.B. Hochsetzsteller (engl. Boost Converter), ausgebildet ist, der an seinem Ausgang eine Zwischenkreisspannung erzeugt, die höher ist als eine an seinem Eingang anliegende Eingangsspannung. Diese Zwischenkreisspannung dient wiederum als Eingangsspannung für die nachfolgende Schaltungsstufe, z.B. eine Impulsstufe, insbesondere ein Sperrwandler, Eintaktflusswandler oder eine Halbbrücke.

Die Verwendung eines spannungserhöhenden Konverters ist insbesondere beim gepulsten Betrieb von dielektrischen Barriere-Entladungslampen vorteilhaft. Damit lässt sich nämlich auch bei externen Spannungsversorgungen mit relativ geringen Spannungen die optimale Eingangsspannung für die nachfolgende Impulsstufe erzeugen. Dadurch wiederum kann die Impulsstufe optimal an die mit ihr verbundene dielektrische Barriere-Entladungslampe angepasst und folglich die Gesamteffizienz des Vorschaltgeräte-Lampen-Systems optimiert werden.

Die zwischen Eingangs- und nachfolgender Schaltungsstufe geschaltete Zwischenkreis-Überstromsicherung ist so dimensioniert, dass ihr Schwellwert für das Ansprechen kleiner ist als der Nennstrom des Vorschaltgeräts, bzw. als der Schwellwert für das Ansprechen einer gegebenenfalls zusätzlich mit der Eingangsstufe verbundenen Eingangs-Überstromsicherung. Für beide Sicherungen kommen geeignet ausgewählte Schmelzsicherungen in Betracht. Jedenfalls löst die Zwischenkreis-Überstromsicherung bei einem Fehler in der nachfolgenden Schaltungsstufe aus. Das ist deshalb besonders vorteilhaft, weil diese Schaltungsstufe - bei einer zweistufigen Schaltungsanordnung ist sie die letztlich mit der Lampe verbundene Ausgangsstufe - in unmittelbarer Wechselwirkung mit der Lampe und ihrer Umgebung steht und sich Lampenfehler, z.B. eine zerbrochene Lampe, Hochspannungsüberschläge oder Anwendungsfehler, beispielsweise eine bei der Installation verletzte Kabelisolierung, unmittelbar auf die Elektronikbauteile der Ausgangsstufe auswirken. Daher ist die Wahrscheinlichkeit für das Auftreten eines Fehlers in der Ausgangsstufe erheblich höher als in der Eingangsstufe.

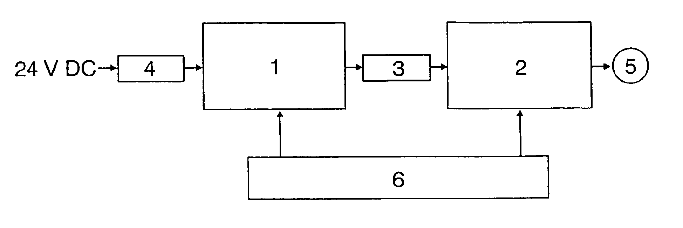

### Kurze Beschreibung der Zeichnung

Im Folgenden soll die Erfindung anhand eines Ausführungsbeispiels näher erläutert werden. Die Figur zeigt:
ein Beleuchtungssystem mit einer zweistufigen erfindungsgemäßen Schaltungsanordnung, die mit einer dielektrischen Barriere-Entladungslampe verbunden ist.

### Bevorzugte Ausführung der Erfindung

In der Figur ist ein Beleuchtungssystem für den gepulsten Betrieb einer dielektrischen Barriere-Entladungslampe anhand von Funktionsblöcken schematisch dargestellt. Es besteht im wesentlichen aus einem Hochsetzsteller 1 als Eingangsstufe, einem Sperrwandler 2 als Ausgangsstufe zur Erzeugung hochfrequenter Hochspannungsimpulse, einer Zwischenkreis-Überstromsicherung 3, die zwischen Hochsetzsteller 1 und Sperrwandler 2 geschaltet ist, einer Eingangs-Überstromsicherung 4, die in den mit 24 Volt Gleichspannung von einem externen Netzteil (nicht dargestellt) versorgten Eingang geschaltet ist, einer flachen dielektrischen Barriere-Entladungslampe 5, die mit dem Ausgang des Sperrwandlers 2 verbunden ist sowie einer Steuerschaltung 6, mit der die an die dielektrische Barriere-Entladungslampe 5 angepassten Werte der Betriebsparameter wie Puls- und Pausendauer, Dimmerbetrieb etc. vorgewählt werden. Für weitere Details zu den Funktionsblöcken, die als solche dem Fachmann bereits bekannt sind, wird auf den einschlägigen Stand der Technik verwiesen, zumal die konkrete Ausgestaltung der Funktionsblöcke für das Verständnis der Erfindung allenfalls von untergeordneter Bedeutung sind. Zu flachen dielektrischen Barriere-Entladungslampen finden sich Details z.B. in der US 6 034 470, zur gepulsten Betriebsweise dieser Lampen in der US 5 604 410 und zu Sperrwandlern für dielektrische Barriere-Entladungslampen in der bereits eingangs zitierten US 6 323 600.

Das Beleuchtungssystem ist für eine elektrische Leistungsaufnahme von 65 W ausgelegt, woraus bei der erwähnten Eingangsspannung von 24 V ein Nenn-Eingangsstrom von ca. 2,7 A resultiert. Für die Eingangs-Überstromsicherung 4 wird eine Schmelzsicherung mit einem Nennstrom von 5 A gewählt, z.B. die oberflächenmontierbare Sicherung Nr. 419 SM der Firma Wickmann. Der Hochsetzsteller 1 wandelt die an seinem Eingang anliegende Gleichspannung von 24 V in eine an seinem Ausgang anstehende Zwischenkreisgleichspannung von 70 V um. Daraus resultiert dort ein Zwischenkreisnennstrom von 0,93 A im. Für die Zwischenkreis-Überstromsicherung 3 wird deshalb eine Schmelzsicherung mit einem Nennstrom von 2 A gewählt. Das oben erwähnte externe Netzteil liefert einen Nennstrom von 4 A und im Fehlerfall einen auf 5 A begrenzten Strom. Im Fehlerfall, z.B. bei einem Kurzschluss des Sperrwandlers 2, unterbricht die Zwischenkreis-Überstromsicherung 3 den Stromkreis, wenn der Strom den Nennwert von 2 A wesentlich überschreitet und verhindert so wirkungsvoll lokale Überhitzungen der Schaltungsanordnung. Ohne die 2 A Zwischenkreis-Überstromsicherung 3 würde im Kurzschlussfall ungehindert ein Strom von 5 A fließen, ohne dass die 5 A Eingangs-Überstromsicherung 4 zuverlässig anspräche, und folglich die Schaltungsanordnung beschädigen oder gar völlig zerstören.

## Patentansprüche

1. Schaltungsanordnung zum Betreiben von elektrischen Lampen mit einer Eingangsstufe (1) und zumindest einer nachfolgenden weiteren Schaltungsstufe (2), **dadurch gekennzeichnet, dass**
• die Eingangsstufe (1) als spannungserhöhender Konverter ausgebildet ist, der
o an seinem Ausgang eine Zwischenkreisspannung erzeugt, die höher ist als eine an seinem Eingang anliegende Eingangsspannung, wobei
■ die Zwischenkreisspannung als Eingangsspannung für die nachfolgende Schaltungsstufe (2) dient,
o im Fehlerfall den in seinem Eingang fließenden Fehlerstrom weitgehend vollständig auch in seinem Ausgang und folglich in die nachfolgende Schaltungsstufe (2) fließen lässt, und
• zwischen Eingangsstufe (1) und nachfolgender Schaltungsstufe (2) eine Zwischenkreis-Überstromsicherung (3) geschaltet ist.

2. Schaltungsanordnung nach Anspruch 1, wobei die Eingangsseite der Eingangsstufe (1) mit einer Eingangs-Überstromsicherung (4) verbunden ist.

3. Schaltungsanordnung nach Anspruch 2, wobei die Sicherungen (3, 4) so dimensioniert sind, dass der Schwellwert für das Ansprechen der Zwischenkreis-Überstromsicherung (3) kleiner ist als der Schwellwert für das Ansprechen der Eingangs-Überstromsicherung (4).

4. Schaltungsanordnung nach einem der vorstehenden Ansprüche, wobei die Zwischenkreis-Überstromsicherung (3) und gegebenenfalls auch die Eingangs-Überstromsicherung (4) als Schmelzsicherungen ausgelegt sind.

5. Schaltungsanordnung nach einem der vorstehenden Ansprüche, wobei die Eingangsstufe (1) als Hochsetzsteller ausgebildet ist.

6. Schaltungsanordnung nach einem der vorstehenden Ansprüche, wobei die der Eingangsstufe (1) nachfolgende Schaltungsstufe (2) als Impulsstufe ausgebildet ist.

7. Schaltungsanordnung nach Anspruch 6, wobei die Impulsstufe ein Sperrwandler ist.

8. Beleuchtungssystem mit einer elektrischen Lampe (5), die mit einer Schaltungsanordnung verbunden ist, die die Merkmale einer der vorstehenden Ansprüche aufweist.

9. Beleuchtungssystem nach Anspruch 8, wobei die elektrische Lampe (5) als dielektrische Barriere-Entladungslampe ausgebildet ist.

10. Beleuchtungssystem nach Anspruch 8, sofern auf Anspruch 6 rückbezogen, wobei die dielektrische Barriere-Entladungslampe (5) mit dem Ausgang der Impulsstufe (2) verbunden ist.

## Claims

1. Circuit arrangement for operating electric lamps having an input stage (1) and at least one subsequent further circuit stage (2), **characterized in that**
• the input stage (1) is in the form of a voltage-increasing converter which
o produces, at its output, an intermediate circuit voltage which is higher than an input voltage applied to its input,
■ the intermediate circuit voltage acting as the input voltage for the subsequent circuit stage (2),
o in the event of a fault, allows the fault current flowing in its input to also flow almost completely in its output and, as a result, into the subsequent circuit stage (2), and
• an intermediate circuit overcurrent protection device (3) is connected between the input stage (1) and the subsequent circuit stage (2).

2. Circuit arrangement according to Claim 1, the input side of the input stage (1) being connected to an input overcurrent protection device (4).

3. Circuit arrangement according to Claim 2, the protection devices (3, 4) being rated such that the threshold response value for the intermediate circuit overcurrent protection device (3) is lower than the threshold response value for the input overcurrent protection device (4).

4. Circuit arrangement according to one of the preceding claims, the intermediate circuit overcurrent protection device (3) and, possibly, also the input overcurrent protection device (4) being in the form of fuses.

5. Circuit arrangement according to one of the preceding claims, the input stage (1) being in the form of a step-up converter.

6. Circuit arrangement according to one of the preceding claims, the circuit stage (2) following the input stage (1) being in the form of a pulse stage.

7. Circuit arrangement according to Claim 6, the pulse stage being a flyback converter.

8. Lighting system having an electric lamp (5) which is connected to a circuit arrangement having the features of one of the preceding claims.

9. Lighting system according to Claim 8, the electric lamp (5) being in the form of a dielectric barrier discharge lamp.

10. Lighting system according to Claim 8, in as far as it is related back to Claim 6, the dielectric barrier discharge lamp (5) being connected to the output of the pulse stage (2).

## Revendications

1. Circuit pour faire fonctionner des lampes électriques, comprenant un étage (1) d'entrée et au moins un autre étage (2) de circuit venant ensuite, **caractérisé en ce que**
• l'étage (1) d'entrée est constitué en convertisseur élévateur de tension qui
o produit à sa sortie une tension de circuit intermédiaire qui est plus élevée qu'une tension d'entrée s'appliquant à son entrée, dans lequel
■ la tension de circuit intermédiaire sert de tension d'entrée pour l'étage (2) de circuit venant ensuite,
o en cas de défaut laisse passer le courant de défaut passant dans son entrée dans une grande mesure aussi complètement dans sa sortie et en conséquence dans l'étage (2) de circuit venant ensuite,et
• un court-circuit (3) de surintensité de circuit intermédiaire est monté entre l'étage (1) d'entrée et l'étage (2) de circuit venant ensuite.

2. Circuit suivant la revendication 1, dans lequel le côté entrée de l'étage (1) d'entrée est relié à un court-circuit (4) de surintensité d'entrée.

3. Circuit suivant la revendication 2, dans lequel les courts-circuits (3, 4) sont tels que la valeur de seuil pour que le court-circuit (3) de surintensité de circuit intermédiaire réagisse est plus petite que la valeur de seuil pour que le court-circuit (4) de surintensité d'entrée réagisse.

4. Circuit suivant l'une des revendications précédentes, dans lequel le court-circuit (3) de surintensité de circuit intermédiaire et le cas échéant aussi le court-circuit (4) de surintensité d'entrée sont conçus sous la forme de fusibles.

5. Circuit suivant l'une des revendications précédentes, dans lequel l'étage (1) d'entrée est constitué en convertisseur de suralimention.

6. Circuit suivant l'une des revendications précédentes, dans lequel l'étage (2) de circuit venant à la suite de l'étage (1) d'entrée est constitué sous la forme d'un étage à impulsion.

7. Circuit suivant la revendication 6, dans lequel l'étage à impulsion est un convertisseur à accumulation.

8. Système d'éclairage comprenant une lampe (5) électrique qui est reliée à un circuit ayant les caractéristiques de l'une des revendications précédentes.

9. Système d'éclairage suivant la revendication 8, dans lequel la lampe (5) électrique est constituée sous la forme d'une lampe à décharge rendue incomplète par voie diélectrique.

10. Système d'éclairage suivant la revendication 8, dans la mesure ou elle se rattache à la revendication 6, dans laquelle la lampe (5) à décharge rendue incomplète par voie diélectrique est reliée à la sortie de l'étage (2) à impulsion.
